# EUROPEAN PATENT SPECIFICATION

(11) **EP 3 121 078 B1**
(45) Date of publication and mention of the grant of the patent: **04.05.2022**
(21) Application number: 15177422.1
(22) Date of filing: 20.07.2015
(51) Int. Cl.: B60T 17/00

(54) **MODULAR AIR SUPPLY CONTROL SYSTEM**
MODULARES LUFTVERSORGUNGSSTEUERUNGSSYSTEM
SYSTÈME DE COMMANDE D'ALIMENTATION EN AIR MODULAIRE

(43) Date of publication of application: 25.01.2017
(73) Proprietor: KNORR-BREMSE Systeme für Nutzfahrzeuge GmbH, 80809 München (DE)
(72) Inventor: Balogh, Levente, 2310 Szigetszentmiklos (HU); Nagy, István, 6044 Kecskemét-Hetényegyháza (HU); Ratatics, Gábor, 6034 Helvecia (HU); Prinsen, Fabian, 80805 München (DE); Kinyik, Adam, 4029 Debrecen (HU)

(56) References cited:
- EP-A2- 1 980 312
- DE-A1-102010 018 949
- US-A- 6 125 553

## Description

The present invention relates to an air drying method and system for controlling air amount and water content of a compressed air reservoir of an air supply control system of a vehicle, such as a truck, lorry or bus.

A compressed air system for a vehicle usually includes a number of components having different functions. The components include components to clean and dry the air and to distribute the compressed air to different functions, such as brakes, transmission control, suspensions and door openers. The compressed air system also includes a compressor and one or more reservoirs for the compressed air.

Before air from the air compressor reaches the rest of the air pressure system and the air pressure tanks, it is dried in an air dryer, which may be an air dryer of a desiccant type. The desiccant of the air dryer is frequently regenerated by dry air to maintain good performance of the air dryer. Furthermore, the air pressure in the reservoir or tank(s) is monitored and when a lower set limit is reached the compressor is started to load the air tanks. When a higher set limit of the air pressure of the tanks is reached an unloading valve will open and expand the air pressure to the atmosphere.

By monitoring air delivery from the compressor through the air dryer and by calculating the need for regeneration continuously, on the road, the air dryer process can be optimized.

Furthermore, by measuring ambient temperature and system pressure, the air drying process can be adapted to any application and vehicle operation. Depending on driving conditions, the system can make a choice when the regeneration process is to take place.

Depending on different types and sizes of vehicles, regulations in different countries, demands from owners and drivers, different climates etc. the air supply system may have different parts and functions. The management of generated compressed air in pneumatic brake systems of vehicles may currently be realized through pneumatic, semi electric or fully electronic air processing units. The particular operating types are developed and optimized to certain vehicle types and layouts. However, one processing unit can support one type of compressor control layout only.

More specifically, the pneumatic or semi-electric actuated air control is set to a certain operation method, and cannot be upgraded during the lifetime of the vehicle without changing the whole air processing unit to fully electronic controlled air management, realizing various energy-saving functions. Also, the method of compressor control cannot be improved or modified without change of complete air processing unit. As a result, fuel efficiency cannot be improved later through compressor control.

In the prior art several documents concerning air drying and treatment systems can be found. The publication US 6 125 553 A discloses a controller module for continuous flow twin air dryer systems and a process of controlling the same. The control module is of an electronic type. Other types of modules are not disclosed.

The publication EP 1 980 312 A2 discloses an adsorption drying unit. This unit is controlled by an electronic control unit. Other types of control units are not disclosed.

The publication DE 10 2010 018 949 A1 discloses inter alia a compressed air treatment device, a compressed air supply system with a compressed air treatment device and a treatment module therefor and a method for operation of a compressed air treatment device. Retrofitting of the compressed air supply system with a purely pneumatic pressure supply system is suggested by this publication, but therefore several parts of the system not only the electronic control unit have to be replaced.

Thus, there is a need for a more flexible air supply system, which is more easily adapted to different vehicles and reduces the demands regarding different variants.

It is therefore an object of the present invention to provide an air drying system and method, by means of which a more flexible and easily adaptable air supply system can be achieved.

This object is solved by an air drying device according to claim 1, a pressure control and regeneration module according to claim 8, an air drying system according to claim 12, a construction kit according to claim 13, and a method according to claim 14.

Accordingly, energy saving can be improved by simply changing a module of the air control or drying system, and different control types can be implemented on one base platform. Parallel, a modified compressor control can be realized with the change of one module. By providing the body unit and a multi-purpose interface, at least two of the valve-based pressure control and regeneration module, the pneumatic pressure control and regeneration module, and the electronically controlled pressure control and regeneration module can be mounted interchangeably to the air drying device. Thereby, a modular construction kit of an air processing system can be provided, which can be prepared to be assembled alternatively to at least two of a conventional air processing unit (APU) which can have a time-switch solution for regeneration control, a semi-electronic APU, and a more sophisticated air processing unit like a (full) electronic air control system including one electronic unit which may be mounted on the APU housing. This provides the advantage of having one component platform serving at least two functional levels to fulfil different technological or market requirements.

The additional measures of inputting the at least one pressure signal via an input port, and receiving the at least one pressure signal via the input port, before the at least one pressure signal is used for controlling the air drying device, provide the advantage that the full range of pressure down to zero can be signaled all the time to a dashboard electronic control unit (ECU) of the vehicle. Otherwise, the internal connection from the pressure sensor (e.g. a double pressure sensor (DPS)) to the ECU would be blocked below a certain pressure, since the protection valve (e.g., a multi-circuit protection valve (MCPV) closes. However, the output and input ports can be used to provide a bypass connection, so that the proposed air drying system can read the pressure value from behind the overflow valves and can always forward it to its ECU (e.g., by an external cable or other wired or wireless connection). Then, the pressure value can be sent via a data bus communication (e.g. a CAN bus or the like) from the ECU to the dashboard directly.

Optionally, an additional output port for outputting the at least one pressure signal may be provided, wherein the air drying device may be adapted to send out the at least one pressure signal via the output port and to receive said at least one pressure signal via the input port before the at least one pressure signal is used for controlling the air drying device.

The proposed interface for flexibly connecting the different pressure control and regeneration modules can be provided at an air drying unit or at a protection valve of the air drying device, for example.

Optionally, an external wiring (e.g. a cable) may be provided for transferring the at least one pressure signal from the output port to the input port.

As an additional option, a built-in pressure sensor may be added for providing a backup pressure signal for pressure control in case the bus connection to the dashboard ECU is broken or blocked.

As another backup option, a sensor for sensing at least one of air-flow and temperature may be provided, wherein the air drying device can be adapted to use an output signal of the sensor for estimating system pressure based on efficiency, if the at least one pressure signal is not available.

As another option, the pressure control and regeneration module may comprise the electronically controlled pressure control and regeneration module having a built-in ECU, an outlet for an airflow back stream to an air dryer cartridge, an outlet to an air generator control unit, and at least one cable input for receiving an electric signal from a brake system indicating pressure level of at least one brake circuit, wherein the ECU is adapted to control a state of at least one control valve of the airflow back system and air generator control unit. In a specific example, the electronically controlled pressure control and regeneration module with built-in ECU may comprise at least one pressure sensor adapted to receive an external pneumatic signal from an external circuit (e.g., a park brake circuit) via a tube connection and to transmit it to a vehicle bus system.

As a further option, the pressure control and regeneration module may comprise the pneumatic pressure control and regeneration module having an outlet for an airflow back stream to an air dryer cartridge, wherein a state of a control valve for controlling the air flow back stream may be controlled by a pneumatic regeneration switch, and having an outlet to a compressor control unit, wherein a state of a control valve of the compressor control unit may be controlled by the pneumatic pressure control and regeneration module.

It is noted that the pressure control and regeneration module may be implemented based on discrete hardware circuitry with discrete hardware components, an integrated chip, or an arrangement of chip modules, or based on a single processing device or chip controlled by a software routine or program stored in a memory, written on a computer readable medium, or downloaded from a network, such as the internet.

Furthermore, it shall be understood that the device of claim 1, the module of claim 7, the system of claim 11, the construction kit of claim 12, the method of claim 13 and the computer program of claim 14 may have similar and/or identical preferred embodiments, in particular, as defined in the dependent claims.

It shall further be understood that a preferred embodiment of the invention can also be any combination of the dependent claims or above embodiments with the respective independent claim.

The present invention will now be described based on embodiments with reference to the accompanying drawings in which:
- Fig. 1: shows a schematic side view of a first and second modular option of an air drying system according to a first embodiment;
- Fig. 2: shows a schematic side view of a third modular option of an air drying system according to the first embodiment;
- Fig. 3: shows a schematic diagram of a modular air drying system with a platform component interface according to a second embodiment;
- Fig. 4: shows a columnar representation of electric, pneumatic and data interfaces for platform components according to various embodiments;
- Fig. 5: shows a schematic block diagram of an air drying system with cable bypass connection according to a third embodiment;
- Fig. 6: shows a schematic block diagram of an air drying system with cable bypass connection according to a fourth embodiment;
- Fig. 7: shows a schematic block diagram of an air drying system with cable bypass connection according to a fifth embodiment;
- Fig. 8: shows a schematic block diagram of an air drying system with cable bypass connection according to a sixth embodiment;
- Fig. 9: shows a schematic block diagram of an air drying system with cable bypass connection according to a seventh embodiment; and
- Fig. 10: shows a schematic block diagram of an air drying system without cable bypass connection according to an eighth embodiment.

In the following, preferred embodiments of the present invention will be described on the basis of an air supply system with a modular framework.

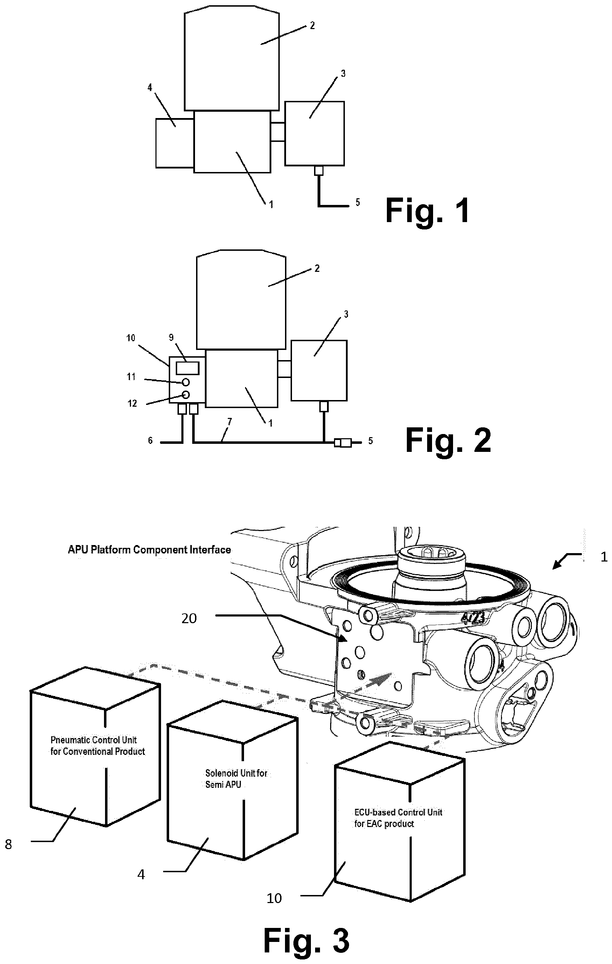

Fig. 1 shows a schematic block diagram of a first modular option of a modular air drying system according to a first embodiment, which comprises an air dryer body or body unit 1, an air dryer cartridge (air drying element or air drying unit) 2, a distribution and protection valve unit 3 for distributing air and protecting against a loss of pressure, and a magnet valve controlled pressure control and regeneration module (which may be a double solenoid or the like) 4 for controlling pressure and regeneration of the air supply system. The air dryer unit 2 is adapted to carry out air treatment and drying and can be fixed to the body unit 1. The distribution and protection valve 13 may also be fixed to the body unit 1, but may as well be arranged at a remote position.

Additionally, a pressure sensor signal cable 5 is provided for signaling sensed pressure to a user and/or control interface (e.g. a dashboard) of the vehicle.

Furthermore, the air supply system in which the air drying system is implemented includes a compressor, one or more reservoirs normally in form of accumulators and different air or pressure consuming devices, such as brakes, steering devices and suspensions.

The body unit 1 may comprise at least one check valve, one unloading valve, one air inlet, one air outlet and an exhaust. Furthermore, the body unit 1 may have a number of recesses (not shown) for receiving the above valves and possible optional valves and other optional equipment. The body unit 1 may also have a number of channels for compressed air and channels used for the controlling valves and possible other equipment. The optional further valves may include a safety valve, further check valves, a turbo protection valve and a depot valve. The optional equipment may be a silencer and/or a heater. The safety valve may be used to protect the modular air system against high air pressure and will only operate in case of failure mode. The check valve of the body unit 1 may be used to prevent air from flowing from the system tanks to the atmosphere during off-loading conditions.

An unloading valve may be used to deflate the inlet ports to atmospheric pressure during offload conditions and exhaust water, oil, moisture etc. from the air drying unit 2.

The distribution and protection valve unit 3 may comprise a multi-circuit protection valve (MCPV) which is used to divide the compressed air system into at least two circuits and to protect the circuits from pressure drops in case of failure. A pressure limiter may be used to maximize the pressure in the circuit for trailer/parking. As further options the system may use kinetic energy of the vehicle for instance during negative driveline torque and adapt the regeneration amount of air to the air that has been compressed.

The air drying system or compressed air treatment system is provided for managing air amount and water content in a compressed air reservoir. In the first modular option, a control outlet (not shown in Fig. 1) to a compressed air generator (compressor) is provided and operated by at least one solenoid or magnet valve of the pressure control and regeneration module 4. Due to the modular arrangement of the system, the magnet valve controlled pressure control and regeneration module 4 can be replaced by a pneumatic pressure control and regeneration module (second modular option) or by an electronically controlled pressure control and regeneration module 10 with built-in ECU 9 (third modular option) as described later in connection with Fig. 2.

The arrangement of Fig. 1 also applies to the second modular option, where the magnet valve controlled pressure control and regeneration module 4 is replaced by a pneumatic pressure control and regeneration module which has an outlet air flow back stream to the air drying unit 2 and wherein the state of the valve at the outlet to the compressor control may be defined by a pneumatic regeneration switch. The state of the control valve is thus defined by pneumatic pressure control and regeneration module.

Fig. 2 shows a schematic side view of an air drying system according to a third modular option of the first embodiment.

In the third modular option, the magnet valve controlled pressure control and regeneration module 4 is replaced by an electronically controlled pressure control and regeneration module 10 with built-in electronic control unit (ECU) 9 which has an outlet for airflow back stream to the air drying unit 2. Now, the state of the valve at the outlet to the compressor control is defined by the built-in ECU 9 with matching software. Furthermore, an outlet 11 for air generator control is provided, wherein the state of the respective control valve for the air generator control can also be defined by the built-in ECU 9 with matching software. At least one analogue electric signal from the brake system indicating pressure level of at least one brake circuit may be connected with at least one cable 7 to the electronically controlled pressure control and regeneration module 10.

As an additional option, at least one pressure sensor may be provided, which can receive an external pneumatic signal from a park brake circuit or the like via a tube connection 12 and which can transmit it to a vehicle CAN bus system 6.

Fig. 3 shows a schematic diagram of a modular air drying system with platform component interface according to a second embodiment.

As can be gathered from the more detailed shape of the body unit 1 of Fig. 3, a platform component interface 20 for the air processing unit (APU) of the air drying system is provided, which is adapted to allow matched fixation or mounting of the different modules described in connection with the first embodiment to the body unit 1. As indicated by respective blocks of Fig. 3, a pneumatic control unit 8 (which corresponds to the above pneumatic pressure control and regeneration module), a solenoid unit 4 for semi-electronic APU (which corresponds to the above magnet valve controlled pressure control and regeneration module 4), and an ECU-based control unit 10 for an electronic air control (EAC) system (which corresponds to the above electronically controlled pressure control and regeneration module) can be selectively mounted to the body unit 1 via the platform component interface 10 to provide a flexible modular air drying system.

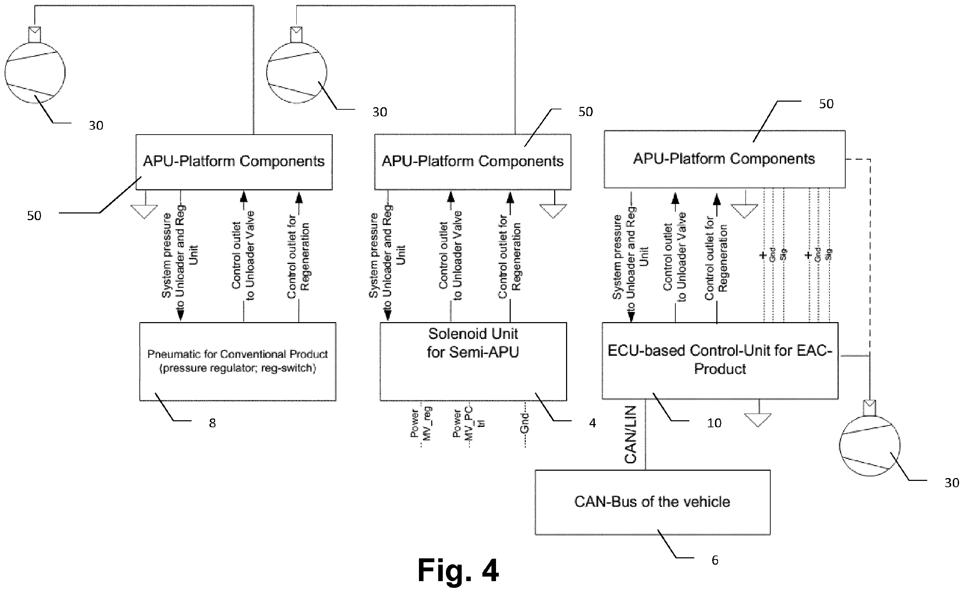

Fig. 4 shows a columnar representation of electric, pneumatic and data interfaces for three different platform components according to a various embodiments.

Compressed air is delivered from a compressor 30 to platform components 50 of the APU. The pressure level is controlled by the selected pressure control and regeneration module.

In the left-hand column, the pneumatic pressure control and regeneration module 8 with pressure regulator and regulator switch is selected for controlling, wherein the system pressure at an unloader valve and a regeneration unit is signaled by the platform components 50 to the pneumatic pressure control and regeneration module 8. In response thereto, the pneumatic pressure control and regeneration module 8 outputs control signals at respective control outlets to the unloader valve and the regeneration unit.

In the middle column, the magnet valve pressure control and regeneration module 4 (or solenoid unit) for semi-electric APU is selected for controlling, wherein different electric signals are applied to the magnet valve pressure control and regeneration module 4 in order to control solenoid(s) of magnet valve(s). Similar to modular option of the left-hand column, the system pressure at an unloader valve and a regeneration unit is signaled by the platform components 50 to the magnet valve pressure control and regeneration module 4. In response thereto, the magnet valve pressure control and regeneration module 4 outputs control signals at respective control outlets to the unloader valve and the regeneration unit.

Finally, in the right-hand column, the electronically controlled pressure control and regeneration module 10 (or ECU-based control unit) for an EAC product is selected for controlling, wherein the electronically controlled pressure control and regeneration module 10 is connected via a respective CAN/LIN interface to the CAN bus system 6 of the vehicle. In addition to modular options of the left-hand and middle column, where the system pressure at an unloader valve and a regeneration unit is signaled by the platform components 50 and responsive control signals are returned at respective control outlets to the unloader valve and the regeneration unit, additional electrical control and power supply signals can be provided to the platform components 50 for enhanced control.

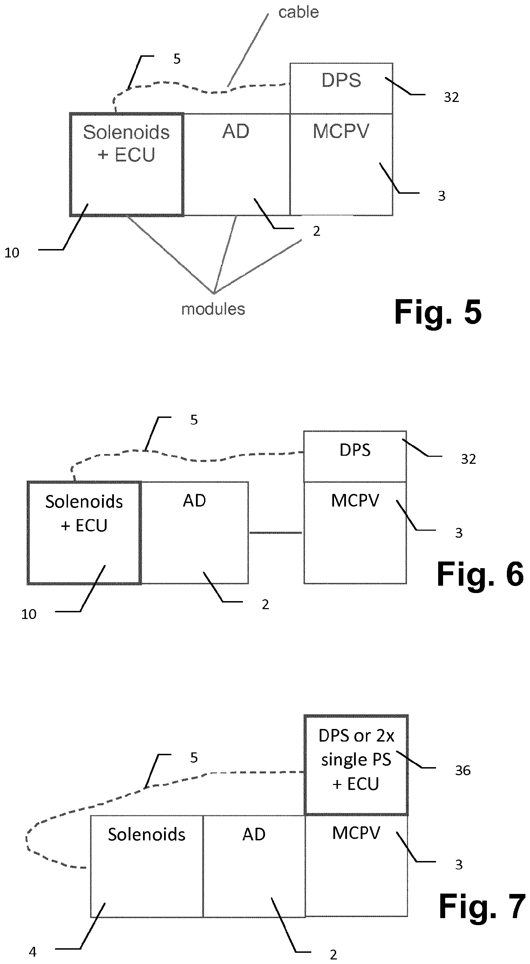

In the following, different embodiments are described with reference to Figs. 5 to 10, where an ECU control adapter 10 is mounted at the air drying unit (AD) 2 or where an ECU control unit is mounted at double pressure sensors (DPS) to obtain an enhanced DPS unit 36 which is provided at the multi-circuit protection valve (MCPV) 3. The DPS may as well be implemented by two single pressure sensors (PS).

In the embodiments of Figs. 5 to 9 an external wire or cable 5 is used for signaling or bypassing pneumatic pressure sensor signals from a double pressure sensor (DPS) 32 to the respective ECU or electric control signals of solenoids from the ECU to solenoids. Thereby, as explained above, measured circuit pressures can be connected from behind the protection valves to the dashboard. This bypass connection enables the air processing system to read the pressure from behind of the overflow valves to its ECU (by the external cable). It can thus be sent via the CAN data bus communication from the ECU to dashboard directly. On the other hand, if the ECU is located at the pressure sensor(s) directly, the bypass connection can be used for forwarding the required controls signals from the ECU to the solenoid(s).

Fig. 5 shows a schematic block diagram of an air drying system with cable bypass connection according to a third embodiment. Here, the pressure values from the DPS 32 are directly sent via the external wiring or cable 5 to the ECU control adapter 10 at the solenoids.

Fig. 6 shows a schematic block diagram of an air drying system with cable bypass connection according to a fourth embodiment. Similar to the third embodiment, the pressure values from the DPS 32 are directly sent via the external wiring or cable 5 to the ECU control adapter 10 at the solenoids. However, in the fourth embodiment, the MCPV 3 with the DPS 32 are arranged at a remote place and not at the air drying unit 2.

Fig. 7 shows a schematic block diagram of an air drying system with cable bypass connection according to a fifth embodiment. Here, the ECU control unit is directly located at the enhanced DPS unit 36 and receives the pressure values. The external wiring or cable 5 is now used for forwarding control signals from ECU control unit to the solenoids 4.

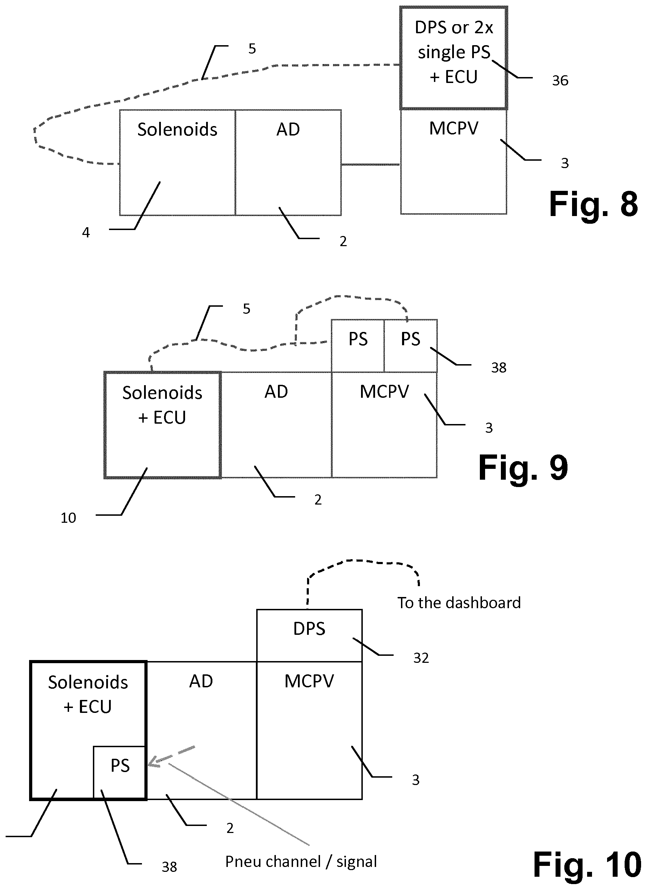

Fig. 8 shows a schematic block diagram of an air drying system with cable bypass connection according to a sixth embodiment. Similar to the fifth embodiment, the control values of the ECU control unit at the enhanced DPS unit 36 are directly sent via the external wiring or cable 5 to the solenoids 4. However, in the sixth embodiment, the MCPV 3 with the enhanced DPS 36 are arranged at a remote place and not at the air drying unit 2

Fig. 9 shows a schematic block diagram of an air drying system with cable bypass connection according to a seventh embodiment. Here, pressure values from two single PS 38 are directly sent via the external wiring or cable 5 to the ECU control adapter 10 at the solenoids.

Fig. 10 shows a schematic block diagram of an air drying system without cable bypass connection according to an eighth embodiment. Here, an additional pressure sensor 38 is provided at the ECU-/solenoid-block 10 directly. Therefore, an internal signaling of pressure values control signals can be achieved via respective output ports and input ports, so that the external wiring or cable is not required. Only, a wiring between the DPS 32 and the dashboard of the vehicle can be provided for pressure signaling.

In the above ECU-based embodiments, the external connection of the ECU 9 might not be available, e.g., due to an error on the CAN bus system 6. Then, as a first option, a normal control mode based on externally received pressure from behind of the overflow valves (with full pressure range) could be initiated based on single sensor located in front of the overflow valve, which can only see pressure down to closing pressure of overflow valves. The built-in pressure sensor could thus give a backup (pneumatic) signal to the system pressure control. As a second option, an additional signal cable between the dashboard / an additional backup sensor / a pressure switch and the EAC with simple digital communication (serial; LIN; PWM, etc.) or analogue connection could be provided, that can communicate the pressure or pressure thresholds to the EAC. Based on these values, the system pressure can be controlled. As a third option, an additional sensor, e.g., an air flow meter or a temperature sensor, which is normally used for adjusting and monitoring the regeneration could be used. In case of a loss of pressure information, this additional sensor can be used for estimating the lost system pressure based on regeneration efficiency. So, in a backup mode, the regeneration could be activated periodically and system pressure is estimated based on the regeneration efficiency. Finally, a fourth option could be measurement of the current of the solenoid and via short cyclic activation of the governor magnet valve (GOV) valve, system pressure is estimated based on the magnet valve pull time. The GOV valve is a magnet valve which provides pressure to control the compressor. However, it is not important which magnet valve is operated. Any magnet valve can be used, if current measurement is provided there, because the pull time is affected by the pressure at the magnet valve inlet.

To summarize, a system and method of controlling air amount and water content of a compressed air reservoir have been described, wherein an interface is provided at a body unit of an air drying device and adapted to provide a connection for at least two of a valve-based pressure control and regeneration module, a pneumatic pressure control and regeneration module, and an electronically controlled pressure control and regeneration module. At least one pressure signal is input via an input port, wherein the at least one pressure signal is received via the input port, before the at least one pressure signal is used for controlling the air drying device.

It is noted that present invention is not restricted to the above preferred embodiments and can be implemented in any air supply system of a vehicle, where a pressure control is used.

## Claims

1. An air drying device for controlling air amount and water content of a compressed air reservoir of a vehicle, said device comprising:
- a body unit (1);
- an interface (20) adapted to provide a connection for at least two of a valve-based pressure control and regeneration module (4), a pneumatic pressure control and regeneration module (8), and an electronically controlled pressure control and regeneration module (10); and
- an input port for inputting at least one pressure signal;
- wherein said air drying device is adapted to receive said at least one pressure signal via said input port before said at least one pressure signal is used for controlling said air drying device.

2. The device according to claim 1, further comprising an output port for outputting said at least one pressure signal, wherein said air drying device is adapted to send out said at least one pressure signal via said output port and to receive said at least one pressure signal via said input port before said at least one pressure signal is used for controlling said air drying device.

3. The device according to claim 1 or 2, wherein said interface (20) is provided at an air drying unit (2) of said air drying device.

4. The device according to claim 1 or 2, wherein said interface (20) is provided at a protection valve (3) of said air drying device.

5. The device according to any one of the preceding claims, further comprising an external wiring (5) for transferring said at least one pressure signal from said output port to said input port.

6. The device according to any one of the preceding claims, further comprising a built-in pressure sensor (38) for providing a backup pressure signal for pressure control.

7. The device according to any of the preceding claims, further comprising a sensor for sensing at least one of airflow and temperature, wherein said device is adapted to use an output signal of said sensor for estimating system pressure based on efficiency, if said at least one pressure signal is not available.

8. A pressure control and regeneration module (4, 8, 10) adapted to be connectable to an air drying device according to any of claims 1 to 7 via said interface (20).

9. The module according to claim 8, wherein said module comprises an electronically controlled pressure control and regeneration module (10) having a built-in electronic control unit, ECU, (9), an outlet for an airflow back stream to an air dryer cartridge (2), an outlet (11) to an air generator control unit, and at least one cable input for receiving an electric signal from a brake system indicating pressure level of at least one brake circuit, wherein said ECU (9) is adapted to control a state of at least one control valve of said airflow back system and said air generator control unit.

10. The module according to claim 8, wherein said electronically controlled pressure control and regeneration module (10) with built-in ECU (9) comprises at least one pressure sensor adapted to receive an external pneumatic signal from an external circuit via a tube connection (12) and to transmit it to a vehicle bus system (6).

11. The module according to claim 8, wherein said module comprises said pneumatic pressure control and regeneration module (8) having an outlet for an air flow back stream to said air drying unit (2), wherein a state of a control valve for controlling said air flow back stream is controlled by a pneumatic regeneration switch, and having an outlet to a compressor control unit, wherein a state of a control valve of said compressor control unit is controlled by said pneumatic pressure control and regeneration module (8).

12. An air drying system comprising an air drying device according to any one of claims 1 to 7 and a pressure control and regeneration module (4, 8, 10) according to any one of claims 8 to 11.

13. A construction kit for an air drying system, said construction kit comprising an air drying device according to any one of claims 1 to 7 and at least two of a valve-based pressure control and regeneration module (4), a pneumatic pressure control and regeneration module (8), and an electronically controlled pressure control and regeneration module (10).

14. A method of controlling air amount and water content of a compressed air reservoir by an air drying system according to claim 12, said method comprising:
- using an interface (20) of the air drying system adapted to provide a connection for at least two of a valve-based pressure control and regeneration module (4), a pneumatic pressure control and regeneration module (8), and an electronically controlled pressure control and regeneration module (10);
- inputting at least one pressure signal via an input port; and
- receiving said at least one pressure signal via said input port, before said at least one pressure signal is used for controlling said air drying device.

## Patentansprüche

1. Lufttrocknungsvorrichtung zum Steuern einer Luftmenge und eines Wassergehalts eines Druckluftbehälters eines Fahrzeugs, wobei die Vorrichtung Folgendes umfasst:
- eine Körpereinheit (1);
- eine Schnittstelle (20), angepasst zum Bereitstellen einer Verbindung für mindestens zwei aus einem ventilbasierten Drucksteuerungs- und Regenerationsmodul (4), einem pneumatischen Drucksteuerungs- und Regenerationsmodul (8) und einem elektronisch gesteuerten Drucksteuerungs- und Regenerationsmodul (10); und
- einen Eingangsanschluss zum Eingeben zumindest eines Drucksignals;
- wobei die Lufttrocknungsvorrichtung angepasst ist zum Empfangen des zumindest einen Drucksignals über den Eingangsanschluss, bevor das zumindest eine Drucksignal zum Steuern der Lufttrocknungsvorrichtung verwendet wird.

2. Vorrichtung nach Anspruch 1, ferner umfassend einen Ausgangsanschluss zum Ausgeben des zumindest einen Drucksignals, wobei die Lufttrocknungsvorrichtung angepasst ist zum Aussenden des zumindest einen Drucksignals über den Ausgangsanschluss und zum Empfangen des zumindest einen Drucksignals über den Eingangsanschluss, bevor das zumindest eine Drucksignal zum Steuern der Lufttrocknungsvorrichtung verwendet wird.

3. Vorrichtung nach Anspruch 1 oder 2, wobei die Schnittstelle (20) an einer Lufttrocknungseinheit (2) der Lufttrocknungsvorrichtung bereitgestellt ist.

4. Vorrichtung nach Anspruch 1 oder 2, wobei die Schnittstelle (20) mit einem Schutzventil (3) der Lufttrocknungsvorrichtung bereitgestellt ist.

5. Vorrichtung nach einem der vorhergehenden Ansprüche, ferner umfassend eine externe Verkabelung (5) zum Übertragen des zumindest einen Drucksignals von dem Ausgangsanschluss zum Eingangsanschluss.

6. Vorrichtung nach einem der vorhergehenden Ansprüche, ferner umfassend einen integrierten Drucksensor (38) zum Bereitstellen eines Reserve-Drucksignals zur Drucksteuerung.

7. Vorrichtung nach einem der vorhergehenden Ansprüche, ferner umfassend einen Sensor zum Erfassen von zumindest einem aus Luftstrom und Temperatur, wobei die Vorrichtung angepasst ist zum Verwenden eines Ausgangssignals des Sensors zum Schätzen des Systemdrucks basierend auf Effizienz, wenn das zumindest eine Drucksignal nicht verfügbar ist.

8. Drucksteuerungs- und Regenerationsmodul (4, 8, 10), dazu angepasst, über die Schnittstelle (20) mit einer Lufttrocknungsvorrichtung nach einem der Ansprüche 1 bis 7 verbindbar zu sein.

9. Modul nach Anspruch 8, wobei das Modul Folgendes umfasst: ein elektronisch gesteuertes Drucksteuerungsund Regenerationsmodul (10) mit einer integrierten elektronischen Steuereinheit, ECU, (9), einen Auslass für eine Luftstromrückströmung zu einer Lufttrocknerpatrone (2), einen Auslass (11) zu einer Luftgeneratorsteuereinheit, und zumindest einen Kabeleingang zum Empfangen eines elektrischen Signals von einem Bremssystem, das ein Druckniveau von zumindest einem Bremskreis anzeigt, wobei die ECU (9) angepasst ist zum Steuern eines Zustands von zumindest einem Steuerventil des Luftstromrückströmungssystems und der Luftgeneratorsteuereinheit.

10. Modul nach Anspruch 8, wobei das elektronisch gesteuerte Drucksteuerungs- und Regenerationsmodul (10) mit integrierter ECU (9) zumindest einen Drucksensor umfasst, der angepasst ist zum Empfangen eines externen pneumatischen Signals von einem externen Kreis über eine Rohrverbindung (12) und zum Senden desselben an ein Fahrzeugbussystem (6).

11. Modul nach Anspruch 8, wobei das Modul das pneumatische Drucksteuerungs- und Regenerationsmodul (8) umfasst, einen Auslass für eine Luftstromrückströmung zu der Lufttrocknungseinheit (2) aufweisend, wobei ein Zustand eines Steuerventils zum Steuern der Luftstromrückströmung durch einen pneumatischen Regenerationsschalter gesteuert wird, und einen Auslass zu einer Kompressorsteuereinheit aufweisend, wobei ein Zustand eines Steuerventils der Kompressorsteuereinheit durch das pneumatische Drucksteuerungs- und Regenerationsmodul (8) gesteuert wird.

12. Lufttrocknungssystem, umfassend eine Lufttrocknungsvorrichtung nach einem der Ansprüche 1 bis 7 und ein Drucksteuerungs- und Regenerationsmodul (4, 8, 10) nach einem der Ansprüche 8 bis 11.

13. Konstruktionssatz für ein Lufttrocknungssystem, wobei der Konstruktionssatz eine Lufttrocknungsvorrichtung nach einem der Ansprüche 1 bis 7 und mindestens zwei aus einem ventilbasierten Drucksteuerungs- und Regenerationsmodul (4), einem pneumatischen Drucksteuerungs- und Regenerationsmodul (8) und einem elektronisch gesteuerten Drucksteuerungs- und Regenerationsmodul (10) umfasst.

14. Verfahren zum Steuern einer Luftmenge und eines Wassergehalts eines Druckluftbehälters durch ein Lufttrocknungssystem nach Anspruch 12, wobei das Verfahren Folgendes umfasst:
- Verwenden einer Schnittstelle (20) des Lufttrocknungssystems, angepasst zum Bereitstellen einer Verbindung für mindestens zwei aus einem ventilbasierten Drucksteuerungs- und Regenerationsmodul (4), einem pneumatischen Drucksteuerungs- und Regenerationsmodul (8) und einem elektronisch gesteuerten Drucksteuerungs- und Regenerationsmodul (10);
- Eingeben zumindest eines Drucksignals über einen Eingangsanschluss; und
- Empfangen des zumindest einen Drucksignals über den Eingangsanschluss, bevor das zumindest eine Drucksignal zum Steuern der Lufttrocknungsvorrichtung verwendet wird.

## Revendications

1. Dispositif de séchage de l'air pour régler une quantité d'air et une teneur en eau d'un réservoir à air comprimé d'un véhicule, le dispositif comprenant :
- une unité (1) formant corps ;
- une interface (20) conçue pour procurer une connexion pour au moins deux d'un module (4), reposant sur une soupape, de commande de la pression et de régénération, d'un module (8) pneumatique de commande de la pression et de régénération et d'un module (10) commandé électriquement de commande de la pression et de régénération ; et
- une borne d'entrée pour l'entrée d'au moins un signal de pression ;
- dans lequel le dispositif de séchage est conçu pour recevoir le au moins un signal de pression par l'intermédiaire de la borne d'entrée, avant que le au moins un signal de pression soit utilisé pour commander le dispositif de séchage de l'air.

2. Dispositif suivant la revendication 1, comprenant en outre une borne de sortie pour faire sortir le au moins un signal de pression, dans lequel le dispositif de séchage de l'air est conçu pour faire sortir le au moins un signal de pression par l'intermédiaire de la borne de sortie et pour recevoir le au moins un signal de pression par l'intermédiaire de la borne d'entrée, avant que le au moins un signal de pression soit utilisé pour commander le dispositif de séchage de l'air

3. Dispositif suivant la revendication 1 ou 2, dans lequel l'interface (20) est prévue à une unité (2) de séchage de l'air du dispositif de séchage de l'air.

4. Dispositif suivant la revendication 1 ou 2, dans lequel l'interface (20) est prévue à une soupape (3) de protection du dispositif de séchage de l'air.

5. Dispositif suivant l'une quelconque des revendications précédentes, comprenant en outre un câblage (5) extérieur pour transférer le au moins un signal de pression de la borne de sortie à la borne d'entrée.

6. Dispositif suivant l'une quelconque des revendications précédentes, comprenant en outre un capteur (38) de pression intégré pour fournir un signal de pression de secours pour commander la pression.

7. Dispositif suivant l'une quelconque des revendications précédentes, comprenant en outre un capteur de détection d'au moins l'un d'un débit d'air et d'une température, dans lequel le dispositif est conçu pour utiliser un signal de sortie de ce capteur afin d'estimer une pression du système reposant sur une efficacité, si le au moins un signal de pression n'est pas disponible.

8. Module (4, 8, 10) de commande de la pression en une régénération conçue pour être reliée à un dispositif de séchage de l'air suivant l'une quelconque des revendications 1 à 7 par ladite interface (20).

9. Module suivant la revendication 8, dans lequel le module comprend un module (10) commandé électroniquement de commande de la pression et de régénération ayant une unité électronique de commande intégrée, ECU, (9), et une sortie pour un courant de retour de débit d'air à une cartouche (2) de sécheur d'air, une sortie (11) allant à une unité de commande de générateur d'air et au moins une entrée de câble pour recevoir un signal électrique d'un système de frein indiquant un niveau de pression d'au moins un circuit de frein, dans lequel l'ECU (9) est conçu pour commander un état d'au moins une soupape de commande du système de retour de débit d'air et de l'unité de commande du générateur d'air.

10. Module suivant la revendication 8, dans lequel le module (10) commandé électroniquement de commande de la pression et de régénération à ECU (9) intégré comprend au moins un capteur de pression conçu pour recevoir un signal pneumatique extérieur d'un circuit extérieur par l'intermédiaire d'une connexion (12) tubulaire et pour le transmettre à un système (6) de bus de véhicule.

11. Module suivant la revendication 8, dans lequel le module comprend un module (8) de commande pneumatique de commande de la pression et de régénération ayant une sortie pour un courant de retour de débit d'air allant à l'unité (2) de séchage de l'air, dans lequel un état d'une vanne de commande pour commander le courant de retour de débit d'air est commandé par un interrupteur pneumatique de régénération, et ayant une sortie menant à une unité de commande de compresseur, dans lequel un état d'une soupape de commande de l'unité de commande de compresseur est commandé par le module (8) pneumatique de commande de la pression et de régénération.

12. Système de séchage de l'air comprenant un dispositif de séchage de l'air suivant l'une quelconque des revendications 1 à 7 et un module (4, 8, 10) de commande de la pression et de régénération suivant l'une quelconque des revendications 8 à 11.

13. Kit de construction pour un système de séchage de l'air, le kit de construction comprenant un dispositif de séchage de l'air suivant l'une quelconque des revendications 1 à 7 et au moins deux d'un module (4), reposant sur une soupape, de commande de la pression et de régénération, d'un module (8) pneumatique de commande de la pression et de régénération et d'un module (10) commandé électriquement de commande de la pression et de régénération.

14. Procédé pour régler la quantité d'air et la teneur en eau d'un réservoir d'air comprimé par un système de séchage de l'air suivant la revendication 12, procédé dans lequel :
- on utilise une interface (20) du système de séchage de l'air conçue pour procurer une connexion pour au moins deux d'un module (4), à base de soupape, de commande de la pression et de régénération d'un module (8) pneumatique de commande de la pression et de régénération et d'un module (10) commandé électroniquement de commande de la pression et de régénération ;
- on entre au moins un signal de pression par l'intermédiaire d'une borne d'entrée ; et
- on reçoit le au moins un signal de pression par l'intermédiaire de la borne d'entrée, avant que le au moins un signal de pression soit utilisé pour commander le dispositif de séchage de l'air.
